# FASCICULE DE BREVET EUROPEEN

(11) **EP 1 143 153 B1**
(45) Date de publication et mention de la délivrance du brevet: **29.09.2004**
(21) Numéro de dépôt: 01420082.8
(22) Date de dépôt: 06.04.2001
(51) Int. Cl.: F15D 1/04, F16L 41/02

(54) **Té muni d'un dispositif pour diminuer les vibrations et les à-coups dans un réseau de conduit pour fluide gazeux, réseau de conduit équipé d'un tel té**
Mit einer Vorrichtung zur Schwingungs- und Schockverringerung ausgestattes T-Stück in einer Gasrohranlage und mit einem derartigen T-Stück ausgestattete Rohranlage
Tee with a device for diminishing vibrations and shocks in a gaseous fluid network, conduit network equipped with such a tee

(30) Priorité: 07.04.2000 FR 0004436
(43) Date de publication de la demande: 10.10.2001
(73) Titulaire: Picard, Gilbert, 69009 Lyon (FR)
(72) Inventeur: Picard, Gilbert, 69009 Lyon (FR)
(74) Mandataire: Vuillermoz, Bruno

(56) Documents cités:
- DD-A- 8 115
- DE-B- 1 111 567
- DE-U- 1 684 137
- GB-A- 1 210 994
- US-A- 2 911 235
- PATENT ABSTRACTS OF JAPAN vol. 013, no. 229 (M-831), 26 mai 1989 (1989-05-26) & JP 01 043417 A (DAISHIN), 15 février 1989 (1989-02-15)

## Description

La présente invention concerne un té comprenant un dispositif pour faire diminuer les vibrations et les à-coups et pour accélérer l'éjection du fluide gazeux dans un réseau de conduit pour fluide gazeux.

La présente invention concerne enfin un conduit de fumée équipé d'un té comprenant un dispositif pour faire diminuer les vibrations et les à-coups et pour accélérer l'éjection du fluide gazeux dans un réseau de conduit pour fluide gazeux.

Un té à 90° est une pièce de dévoiement qui a pour fonction principale d'acheminer des fluides d'une direction rectiligne vers une autre direction située à 90° par rapport à cette première direction. Par sa conception, le té présente une première branche d'arrivée en amont et une deuxième branche de départ en aval positionnée à 90° l'une de l'autre. Une paroi de la deuxième branche est ainsi située directement en face de la première branche amont et fait face à l'arrivée directe des fluides. En arrivant contre cette paroi, les fluides turbulents se mettent alors à tourbillonner et à se disperser notamment dans la partie basse du té. Les vitesses d'éjection des fluides sont ralenties et s'avèrent insuffisantes pour une circulation correcte vers l'aval du réseau de conduit pour fluide gazeux. Ceci donne lieu dans le sens d'écoulement des fluides vers l'aval du réseau de conduit, à un phénomène plus particulièrement connu sous le nom de « bourrage ».

Cette paroi de la deuxième branche, ainsi soumise aux pressions et turbulences des fluides se met également à vibrer en générant des vibrations sourdes et à faible fréquence, ce phénomène étant plus particulièrement connu sous le nom de « tamponnage ». Les vitesses d'éjection des fluides sont alors encore plus ralenties et elles engendrent d'avantage un accroissement des vibrations, qui finissent par générer des à-coups dans l'écoulement des fluides vers l'aval du réseau de conduit. Les vibrations et les à-coups sont bruyants et se transmettent à l'ensemble du réseau, ainsi qu'aux locaux traversé par ce dernier. Les vibrations et les à-coups déboîtent les éléments du réseau, et plus particulièrement en cas d'utilisation du réseau en surpression. Le réseau n'est alors plus étanche aux fluides, ce qui devient dangereux pour l'acheminement de fluides nocifs telles que des fumées.

### Etat de la technique

On connaît d'après le DE- 16.84.137 un dispositif permettant de neutraliser des tourbillons de fluides dans un croisement de tubes. Sensiblement en face de l'embranchement sont disposées des ailettes directrices. Elles sont étagées, présentent des dimensions différentes et sont décalées les unes par rapport aux autres.

On connaît d'après le DD- 8.115 un dispositif comprenant des moyens formant déflecteur insérés à l'intérieur d'un élément de dévoiement en T ayant une première branche et une deuxième branche positionnée à 90° l'une de l'autre. Les moyens formant déflecteur sont constitués par une série d'aubes inclinées positionnées dans un corps en forme de corbeille inséré dans l'élément de dévoiement en T.

Un inconvénient de ces dispositifs de l'art antérieur est qu'ils ne permettent pas une véritable orientation de l'écoulement du fluide. Ils agissent uniquement en divisant la force d'action du flux gazeux arrivant sur eux. Au niveau du dévoiement, le fluide est ainsi fractionné en plusieurs écoulements qui se recomposent ensuite après le passage du dévoiement. Etant donné qu'ils laissent persister des espaces derrière eux, dans lesquels le fluide peut encore circuler, ces dispositifs ne permettent pas la diminution des vibrations et du nombre d'à-coups dans le reste du réseau en aval.

### Résumé de l'invention

Un premier problème consiste à mettre au point un dispositif pour diminuer les vibrations et les à-coups dans l'ensemble d'un réseau pour fluide gazeux situé en aval du dispositif.

Un deuxième problème est de prévoir un dispositif simple et efficace qui doit être inséré à l'intérieur d'un élément de dévoiement en T présent dans le réseau pour fluide gazeux.

Un troisième problème posé est de permettre avec un dispositif un écoulement de produits condensés en provenance du fluide gazeux, une fois le dispositif placé dans l'élément de dévoiement en T.

Un quatrième problème est d'autoriser une visite d'entretien de l'élément de dévoiement en T et du réseau pour fluide gazeux situé en aval, sans que le dispositif viennent gêner et obstruer le passage.

Un cinquième problème est de concevoir une forme et un positionnement du dispositif apte à parfaire le glissement laminaire du fluide gazeux.

Un élément de dévoiement en T comprenant un dispositif pour diminuer les vibrations et les à-coups dans un réseau de conduit pour fluide gazeux, comprend des moyens formant déflecteur insérés à l'intérieur, et a une première branche d'arrivée et une deuxième branche de départ positionnée à 90° l'une de l'autre.

Conformément à la présente invention, cet élément est caractérisé en ce que les moyens formant déflecteur sont constitués par une unique plaque formant déflecteur inclinée par rapport au sens d'écoulement du fluide gazeux, de façon à orienter l'écoulement du fluide gazeux à partir de la première branche d'arrivée du té vers la deuxième branche de départ du té positionnée à 90°.

Par fluide gazeux, on entend gaz, mélanges de gaz, ou gaz incorporant des particules solides, telles que des fumées issues de corps en combustion ou portés à haute température. Avec un tel dispositif à plaque unique formant déflecteur positionné à cet endroit, on évite les phénomènes de « bourrage » dans la partie basse du té, ce qui permet une nouvelle accélération des vitesses d'éjection de fluide gazeux. Toutes les vibrations sont ainsi supprimées.

Afin de permettre un écoulement des produits condensés, qui sont liquides ou sirupeux et/ou des suies provenant du fluide gazeux, un espace est ménagé entre la plaque formant déflecteur et l'extrémité intérieur d'une troisième branche du té positionnée à 90° de la première branche d'arrivée et alignée avec la deuxième branche de départ.

Selon une première forme de réalisation, la plaque formant déflecteur se rabat contre la paroi située entre la deuxième branche de départ et la troisième branche du té. La plaque peut être directement solidarisée à une paroi située vers l'extrémité amont de la deuxième branche de départ du té. Préférentiellement, la plaque formant déflecteur est maintenue par un support amovible se présentant sous la forme d'une barre. Cette barre peut être accrochée d'un côté à une gouttière fixée la paroi vers l'extrémité intérieure de la troisième branche du té et peut être accrochée de l'autre côté à l'extrémité libre de la plaque formant déflecteur.

Selon une deuxième forme de réalisation, la plaque formant déflecteur est amovible. Préférentiellement, le dispositif va comprendre deux supports. Un premier support peut être long et plaqué contre la paroi située entre la deuxième branche de départ et la troisième branche du té. Un deuxième support peut être plus court et attaché à l'extrémité libre de la plaque formant déflecteur. Pour solidariser de manière amovible la plaque et ses deux supports, un collier va pouvoir favorablement s'écarter et permettre de plaquer le premier support et le deuxième support contre la paroi vers l'extrémité intérieure de la troisième branche du té. Le collier peut comprendre deux rebords ouverts et recourbés sur l'intérieur avec une vis et deux écrous, ce qui permet un écartement du collier.

De préférence, la plaque formant déflecteur présente une surface concave et sensiblement ovale. D'une manière favorable, la plaque formant déflecteur est positionnée à sensiblement 45° par rapport à l'axe médian d'écoulement du fluide gazeux dans la première branche d'arrivée du té.

Lorsque la première branche d'arrivée et la deuxième branche de départ du té présentent une section circulaire, les bords de la plaque formant déflecteur peuvent alors épouser la forme circulaire de la première branche d'arrivée et de la deuxième branche de départ du T.

Conformément à un troisième aspect de l'invention, un réseau de conduit de fumée est caractérisé en ce qu'il comprend un ou plusieurs éléments de dévoiement en T pouvant comprendre un dispositif tel que décrit ci-dessus.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :

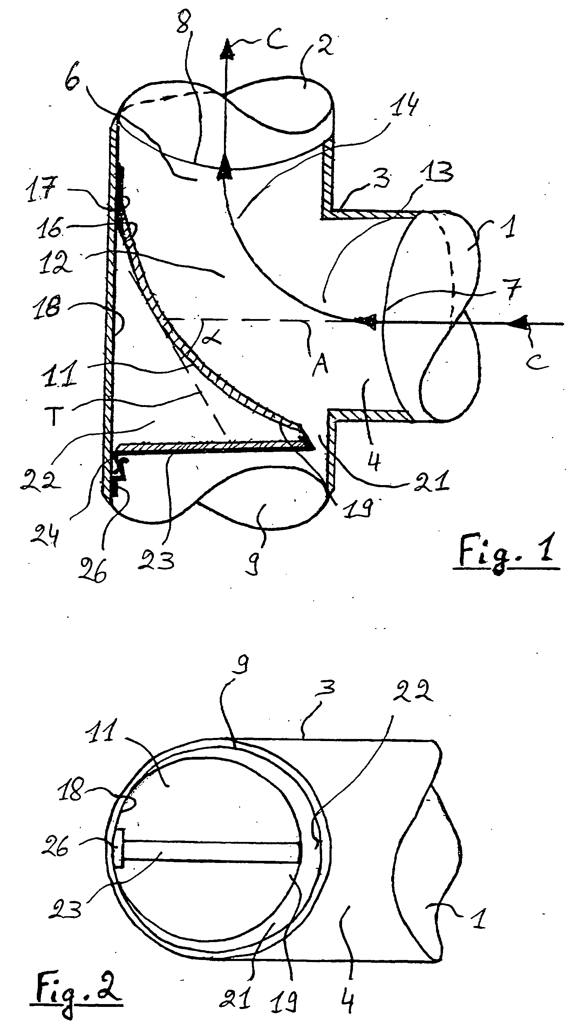

- la Figure 1 représente une vue en écorché avec coupe transversale d'un té équipé d'un dispositif selon un premier mode de réalisation ;
- la Figure 2 représente une vue du dessous du té équipé du dispositif de la Figure 1 ;

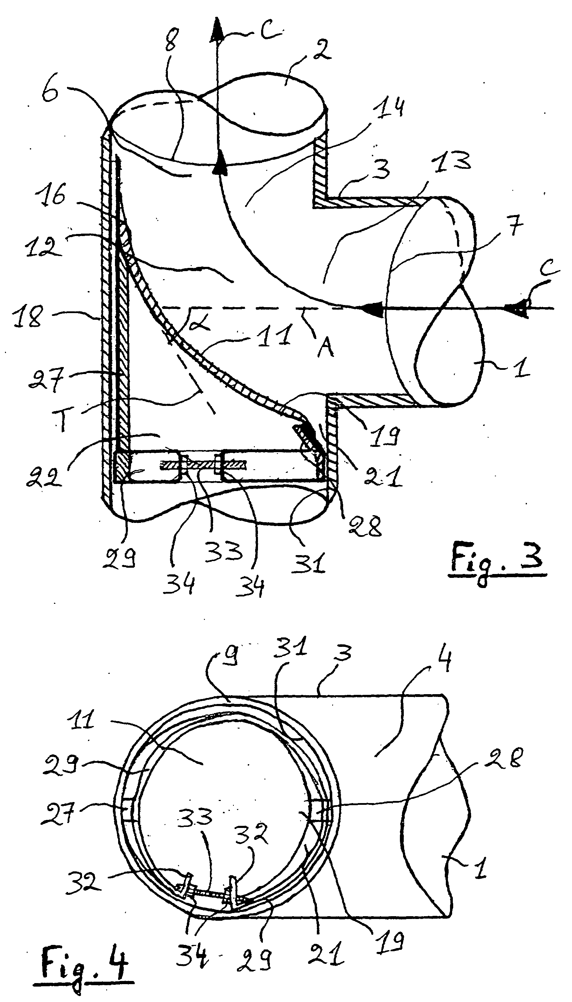

- la Figure 3 représente une vue en écorché avec coupe transversale d'un té équipé d'un dispositif selon un deuxième mode de réalisation ; et
- la Figure 4 représente une vue du dessous du té équipé du dispositif de la Figure 3.

### Description détaillée

Une partie d'un réseau de circulation de fumée comprend une première tubulure d'arrivée de fumée 1 et une deuxième tubulure de départ de fumée 2, disposées perpendiculairement l'une par rapport à l'autre. Un élément de dévoiement 3 en forme de T permet de réaliser une connexion de la première tubulure 1 à la deuxième tubulure 2. La première tubulure 1 et la deuxième tubulures 2 sont cylindriques et ont des sections comprises entre 10 et 600 mm ou supérieures.

L'élément de dévoiement 3 en T comprend une première branche d'arrivée du fluide 4, et une deuxième branche de départ du fluide 6 qui sont positionnées à 90° l'une de l'autre. Une extrémité amont 7 de la première branche d'arrivée 4 est reliée à la première tubulure d'arrivée 1. Une extrémité amont 8 de la deuxième branche de départ 6 est reliée à la deuxième tubulure de départ 2.

Les fumées circulent selon la flèche C à partir de la première tubulure d'arrivée 1, vers la première branche d'arrivée 4 du T, ensuite à l'intérieur du té 3, vers la deuxième branche de départ 6, et enfin sortent par la deuxième tubulure de départ 2.

L'élément de dévoiement 3 en T comprend en outre une troisième branche 9, qui est disposée à 90° de la première branche d'arrivée 4 et qui est dans l'alignement de la deuxième branche de départ 6. Cette troisième branche est obturée par un couvercle (non représenté) et elle est destinée à la récupération des suies, des produits condensés qui tombent de la deuxième tubulure de départ de fumée 2.

On a prévu un dispositif insérée dans le té 3, pour diminuer, voire éliminer les vibrations et les à-coups. Ce dispositif comprend une plaque formant déflecteur 11, sur laquelle les fumées glissent de façon laminaire, ce qui réduit ou supprime les effets turbulents et tourbillonnants de la fumée. La plaque est placée dans le volume 12 défini par une extrémité avale 12 de la première branche d'arrivée 4 et une extrémité amont 14 de la deuxième branche de départ 6. Elle est positionnée de sorte de son angle d'inclinaison α défini par rapport à l'horizontale ou par rapport à l'axe médian A de la tubulure d'arrivée 1 et par rapport à la tangente T à la surface de la plaque 11 soit sensiblement égal à 45°. Cependant cette inclinaison α est variable en fonction des diamètres des tubulures 1 et 2 pour lesquelles le té 3 avec sa plaque 11 est utilisé.

Cette plaque 11 présente une forme concave sensiblement ovale, vue en coupe transversale. Les fumées ainsi guidées à l'intérieur du té à 90° ne heurtent plus la paroi opposée, mais elles s'écoulent directement et sans tourbillon vers la deuxième branche de départ 6.

Selon un premier mode de réalisation, la plaque 11 du dispositif est fixée à l'une de ses extrémités 16 par un ou plusieurs point de fixation 17, par exemple de type soudure, sur la paroi intérieure 18 du té 3 au niveau de l'extrémité amont 14 de la deuxième branche de départ 6. L'autre extrémité 19 de la plaque 11 est maintenue libre. Ceci permet de ménager un espace 21 entre l'extrémité libre 19 de la plaque 11 et une extrémité intérieure 22 de la troisième branche 9 du té 3. Cet espace permet de laisser passer les suies et autres produits condensés vers la troisième branche du té 3.

Pour maintenir la plaque 11, on a prévu une barre de fixation horizontale 23. Cette barre est solidarisée à l'extrémité libre 19 de la plaque par exemple par une soudure ou par une charnière (non représentée), passe transversalement par rapport à la troisième branche 9 du té 3 et rejoint la paroi intérieure 18 du té 3. Au niveau de la paroi 18, la barre 23 est repliée en en crochet 24. Le crochet 24 est inséré dans un élément formant gouttière 26 fixé à la paroi 18.

Lors d'une visite de contrôle ou d'entretien de la première tubulure 1, de la deuxième tubulure 2, et du té 3, l'opérateur va soulever la barre 23. Il va dégager le crochet 24 de la gouttière 26 et il va replier la barre 23. Ensuite, l'opérateur va replier la plaque 11 en la repoussant contre la paroi intérieure 18 du té 3 et en la faisant pivoter par rapport à son point de fixation 17. Le té 3 et les deux tubulures 1 et 2 sont ainsi accessibles visuellement et par des moyens de nettoyage. Une fois la visite terminée, le dispositif selon le premier mode de réalisation avec sa plaque 11 peut être facilement replacé dans sa position d'origine.

Selon un deuxième mode de réalisation, le dispositif avec sa plaque 11 est complètement amovible et il peut être sorti de son volume 12 et du té 3. La plaque 11 est fixée à l'une de ses extrémités 16 à un premier support 27 disposé longitudinal par rapport à la deuxième tubulure de départ 2. Le premier support 27 descend à partir de l'extrémité amont 14 de la deuxième branche de départ 6 du té 3 vers l'extrémité intérieure 22 de la troisième branche 9 du té 3. Ce premier support 27 présente une grande longueur pour permettre l'inclinaison de la plaque 11 selon l'angle α. Le premier support 27 est plaqué contre la paroi intérieure 18 du té 3.

La plaque 11 est fixée à l'autre de ses extrémités 19 à un deuxième support 28. Etant donné l'inclinaison plaque 11 selon l'angle α, ce deuxième support 28 présente une longueur plus courte que le premier support 27.

Afin de solidariser la plaque 11, le dispositif comprend un collier formant bride 29. Le collier 29 fait le tour de l'extrémité intérieure 22 de la troisième branche 9 du té 3. Le collier 29 permet de plaquer le premier support 27 et le deuxième support 28 contre la paroi intérieure 31 de la troisième branche 9, ce qui assure une fixation de la plaque 11 à son emplacement dans le volume 12.

Le collier 29 présente deux extrémités libres et ouvertes 32 et recourbées sur l'intérieur. Ces deux extrémités 32 sont percées et une vis 33 permet de les relier. Sur la vis 33, des écrous 34 viennent verrouiller la position de la vis 33. La vis fait écarter les deux extrémités 32 l'une à l'opposé de l'autre, plaquant le collier 29 contre les supports 27 et 28, et la plaque 11 est ainsi solidarisée au té 3.

Lors des visites et entretiens de la première tubulure 1, de la deuxième tubulure 2, et du té 3, l'opérateur va dévisser les écrous 34 et va rapprocher les deux extrémités 32 l'une vers l'autre. Le collier 29 va se desserrer et va libérer les deux supports 27 et 28 des parois contre lesquelles ils étaient plaqués. Le té 3 et les deux tubulures 1 et 2 sont ainsi accessibles visuellement et par des moyens de nettoyage Le dispositif selon le deuxième mode de réalisation avec sa plaque 11 peut ainsi être sorti puis replacé dans sa position d'origine une fois la visite terminée.

La présente invention n'est pas limitée aux modes de réalisation décrits et illustrés.

Toutes les concavités de la plaque 11 sont envisageables. Toutes les formes d'élément de dévoiement 3 en T peuvent être prévues. Les sections des branches 4, 6 et 9 constitutives du té 3 peuvent également varier.

## Revendications

1. Elément de dévoiement en T (3) présent dans un réseau pour fluide gazeux, ayant une première branche d'arrivée (4) et une deuxième branche de départ (6) positionnées à 90° l'une de l'autre, et comprenant un dispositif pour diminuer les vibrations et les à-coups dans le réseau de conduit pour fluide gazeux, ledit dispositif comprenant des moyens formant déflecteur insérés à l'intérieur dudit élément, **caractérisé en ce que** les moyens formant déflecteur sont constitués par une unique plaque formant déflecteur (11) inclinée (α) par rapport au sens d'écoulement en arrivée du fluide gazeux (C), de façon à orienter l'écoulement du fluide gazeux à partir de la première branche d'arrivée (4) du té (3) vers la deuxième branche de départ (6) du té (3) positionnée à 90°.

2. Elément selon la revendication 1, **caractérisé en ce qu'**un espace (21) est ménagé entre la plaque formant déflecteur (11) et l'extrémité intérieure (22) d'une troisième branche (9) du té (3) positionnée à 90° de la première branche d'arrivée (4) et alignée avec la deuxième branche de départ (6).

3. Elément selon la revendication 1 ou 2, **caractérisé en ce que** la plaque formant déflecteur (11) se rabat contre une paroi (18) située entre la deuxième branche de départ (6) et la troisième branche (9) du té (3), et est solidarisée à la paroi (18) vers l'extrémité amont (14) de la deuxième branche de départ (6) du té (3).

4. Elément selon revendication 3. **caractérisé en ce que** la plaque formant déflecteur (11) est maintenue par un support amovible se présentant sous la forme d'une barre (23), accrochée d'un côté à une gouttière (26) fixée la paroi (18) vers l'extrémité intérieure (22) de la troisième branche (9) du té (3) et accrochée de l'autre côté à l'extrémité libre (19) de la plaque formant déflecteur (11).

5. Elément selon la revendication 1 ou 2, **caractérisé en ce que** la plaque formant déflecteur (11) est amovible.

6. Elément selon la revendication 5, **caractérisé en ce qu'**il comprend deux supports, un premier support (27) long et plaqué contre la paroi (18) située entre la deuxième branche de départ (6) et la troisième branche (9) du té (3) et un deuxième support (28) court et attaché à l'extrémité libre (19) de la plaque formant déflecteur (11).

7. Elément selon la revendication 6, **caractérisé en ce qu'**il comprend en outre un collier (29) pouvant s'écarter et permettant de plaquer le premier support (27) et le deuxième support (28) contre la paroi (31) vers l'extrémité intérieure (22) de la troisième branche (9) du té (3).

8. Elément selon la revendication 7, **caractérisé en ce que** le collier (29) comprend deux rebords (32) ouverts et recourbés sur l'intérieur avec une vis (33) et deux écrous (34) permettant un écartement du collier (29).

9. Elément selon l'une des revendications précédentes, **caractérisé en ce que** la plaque formant déflecteur (11) présente une surface concave et sensiblement ovale.

10. Elément selon l'une des revendications précédentes, **caractérisé en ce que** la plaque formant déflecteur (11) est positionnée à sensiblement 45° (α) par rapport à l'axe médian (A) d'écoulement du fluide gazeux dans la première branche d'arrivée (4) du té (3).

11. Elément selon l'une des revendications précédentes, **caractérisé en ce que** la première branche d'arrivée (4) et la deuxième branche de départ (6) du té (3) présentent une section circulaire et **en ce que** les bords de la plaque formant déflecteur (11) épousent la forme circulaire de la première branche d'arrivée (4) et de la deuxième branche de départ (6) du té (3).

12. Réseau de conduit pour fluide gazeux **caractérisé en ce qu'**il comprend un ou plusieurs éléments de dévoiement en T (3) selon les revendications 1-11.

## Patentansprüche

1. T-förmiges Abzweigungselement (3), welches sich in einem Leitungsnetz für gasförmiges Fluid befindet, einen ersten Einströmzweig (4) und einen zweiten Ausströmzweig (6) aufweist, die in einem Winkel von 90° zueinander angeordnet sind, und welches eine Vorrichtung zur Verringerung der Vibrationen und Stöße in dem Leitungsnetz für gasförmiges Fluid umfaßt, wobei die genannte Vorrichtung eine Umlenkung bildende Mittel umfaßt, welche in das genannte Element eingesetzt sind, **dadurch gekennzeichnet, daß** die eine Umlenkung bildenden Mittel aus einer einzigen, eine Umlenkung (11) bildenden Platte bestehen, welche in bezug auf die Strömungsrichtung an der Einströmung des gasförmigen Fluids (C) geneigt (α) ist, so daß sie die Strömung des gasförmigen Fluids ausgehend von dem ersten Einströmzweig (4) des T-Stücks (3) zum zweiten, in einem Winkel von 90° angeordneten Ausströmzweig (6) des T-Stücks (3) hin ausrichtet.

2. Element nach Anspruch 1, **dadurch gekennzeichnet, daß** ein Zwischenraum (21) zwischen der eine Umlenkung (11) bildenden Platte und dem inneren Ende (22) eines dritten, in einem Winkel von 90° zu dem ersten Einströmzweig (4) angeordneten und zu dem zweiten Ausströmzweig (6) ausgerichteten Zweigs (9) des T-Stücks (3) eingebracht ist.

3. Element nach Anspruch 1 oder 2, **dadurch gekennzeichnet, daß** die eine Umlenkung (11) bildende Platte gegen eine zwischen dem zweiten Ausströmzweig (6) und dem dritten Zweig (9) des T-Stücks (3) befindliche Wand (18) anliegt und mit der Wand (18) im Bereich des stromaufwärts gelegenen Endes (14) des zweiten Ausströmzweigs (6) des T-Stücks (3) fest verbunden ist.

4. Element nach Anspruch 3, **dadurch gekennzeichnet, daß** die eine Umlenkung (11) bildende Platte durch einen abnehmbaren Träger gehalten wird, welcher die Form eines Stabes (23) aufweist, welcher auf einer Seite an einer Rinne (26) eingehängt ist, die an der Wand (18) im Bereich des inneren Endes (22) des dritten Zweigs (9) des T-Stücks (3) befestigt ist, und auf der anderen Seite an dem freien Ende (19) der eine Umlenkung (11) bildenden Platte eingehängt ist.

5. Element nach Anspruch 1 oder 2, **dadurch gekennzeichnet, daß** die eine Umlenkung (11) bildende Platte abnehmbar ist.

6. Element nach Anspruch 5, **dadurch gekennzeichnet, daß** es zwei Träger umfaßt, einen ersten, langen und gegen die Wand (18), welche sich zwischen dem zweiten Ausströmzweig (6) und dem dritten Zweig (9) des T-Stücks (3) befindet, gedrückten Träger (27) und einen zweiten, kurzen und an dem freien Ende (19) der eine Umlenkung (11) bildenden Platte befestigten Träger (28).

7. Element nach Anspruch 6, **dadurch gekennzeichnet, daß** es ferner eine spreizbare Schelle (29) umfaßt, die es ermöglicht, den ersten Träger (27) und den zweiten Träger (28) im Bereich des inneren Endes (22) des dritten Zweigs (9) des T-Stücks (3) gegen die Wand (31) zu drücken.

8. Element nach Anspruch 7, **dadurch gekennzeichnet, daß** die Schelle (29) zwei offene Flansche (32) umfaßt, welche zur Innenseite umgebogen sind mit einer Schraube (33) und zwei Muttern (34), welche ein Aufspreizen der Schelle (29) ermöglichen.

9. Element nach einem der vorangehenden Ansprüche, **dadurch gekennzeichnet, daß** die eine Umlenkung (11) bildende Platte eine konkave und im wesentlichen ovale Oberfläche aufweist.

10. Element nach einem der vorangehenden Ansprüche, **dadurch gekennzeichnet, daß** die eine Umlenkung (11) bildende Platte in einem Winkel von im wesentlichen 45° (α) in bezug auf die Mittellinie (A) der Strömung des gasförmigen Fluids in dem ersten Einströmzweig (4) des T-Stücks (3) angeordnet ist.

11. Element nach einem der vorangehenden Ansprüche, **dadurch gekennzeichnet, daß** der erste Einströmzweig (4) und der zweite Ausströmzweig (6) des T-Stücks (3) einen kreisförmigen Querschnitt aufweisen und daß die Kanten der eine Umlenkung (11) bildenden Platte sich an die kreisförmige Form des ersten Einströmzweigs (4) und des zweiten Ausströmzweigs (6) des T-Stücks (3) anschmiegen.

12. Leitungsnetz für einen gasförmiges Fluid, **dadurch gekennzeichnet, daß** es ein oder mehrere T-förmige Abzweigungselement(e) (3) nach den Ansprüchen 1-11 umfaßt.

## Claims

1. T-shaped branching element (3) included in a gaseous fluid network, having a first inlet branch (4) and a second outlet branch (6) positioned at 90° to each other and comprising a device for decreasing the vibrations and shocks in the gaseous fluid conduit network, the said device comprising means forming a deflector inserted into the said element, **characterized in that** the means forming a deflector consist of a single plate forming a deflector (11) which is inclined (α) with respect to the direction of flow of the incoming gaseous fluid (C), so that the flow of the gaseous fluid is orientated from the first inlet branch (4) of the tee (3) towards the second outlet branch (6) of the tee (3) positioned at 90°.

2. Element according to Claim 1, **characterized in that** a space (21) is formed between the plate forming a deflector (11) and the inner end (22) of a third branch (9) of the tee (3) which is positioned at 90° to the first inlet branch (4) and aligned with the second outlet branch (6).

3. Element according to Claim 1 or 2, **characterized in that** the plate forming a deflector (11) is bent down onto a wall (18) located between the second outlet branch (6) and the third branch (9) of the tee (3), and is fixed to the wall (18) towards the upstream end (14) of the second outlet branch (6) of the tee (3).

4. Element according to Claim 3, **characterized in that** the plate forming a deflector (11) is held by a removable support in the form of a bar (23), having one end attached to a gutter (26) fixed to the wall (18) towards the inner end (22) of the third branch (9) of the tee (3) and the other end attached to the free end (19) of the plate forming a deflector (11).

5. Element according to Claim 1 or 2, **characterized in that** the plate forming a deflector (11) is removable.

6. Element according to Claim 5, **characterized in that** it comprises two supports, namely a first support (27) which is long and is placed against the wall (18) located between the second outlet branch (6) and the third branch (9) of the tee (3) and a second support (28) which is short and is attached to the free end (19) of the plate forming a deflector (11).

7. Element according to Claim 6, **characterized in that** it additionally comprises a collar (29) which can be expanded and which enables the first support (27) and the second support (28) to be placed against the wall (31) towards the inner end (22) of the third branch (9) of the tee (3).

8. Element according to Claim 7, **characterized in that** the collar (29) comprises two open flanges (32) which are bent inwards, with a screw (33) and two nuts (34) for expanding the collar (29).

9. Element according to one of the preceding claims, **characterized in that** the plate forming a deflector (11) has a concave and approximately oval surface.

10. Element according to one of the preceding claims, **characterized in that** the plate forming a deflector (11) is positioned at approximately 45° (α) with respect to the median axis (A) of flow of the gaseous fluid in the first inlet branch (4) of the tee (3).

11. Element according to one of the preceding claims, **characterized in that** the first inlet branch (4) and the second outlet branch (6) of the tee (3) have a circular cross section and **in that** the edges of the plate forming a deflector (11) mate with the circular shape of the first inlet branch (4) and the second outlet branch (6) of the tee (3).

12. Gaseous fluid conduit network, **characterized in that** it comprises one or more T-shaped branching elements (3) according to Claims 1 - 11.
